# EUROPÄISCHE PATENTANMELDUNG

(11) **EP 1 395 051 A2**
(43) Veröffentlichungstag der Anmeldung: **03.03.2004**
(21) Anmeldenummer: 03077736.1
(22) Anmeldetag: 01.09.2003
(51) Int. Cl.: H04N 5/74

(54) **Projektionssystem und Verfahren zur exakten Überlagerung von Projektionsbildern**

(30) Priorität: 31.08.2002 DE 10240381
(71) Anmelder: Schrodt, Stefan, 42857 Remscheidt (DE)
(72) Erfinder: Schrodt, Stefan, 42857 Remscheidt (DE)
(74) Vertreter: Lippert, Stachow, Schmidt & Partner

(57) **Zusammenfassung**

Um bei Projektionssystemen mit zumindest zwei Projektoren auf einfache Weise eine Deckungsgleichheit von auf einer Projektionsebene projizierten Bilder zu erhalten, wird vorgeschlagen, dass die Projektoren im gleichen Abstand und im gleichen Projektionswinkel zu einer Projektionsebene angeordnet sind, wobei die Optiken der Projektoren identisch und gleich eingestellt sind. Die maximale Auflösung der Projektorpanel in den zumindest zwei Projektoren ist größer als die Auflösung der darzustellenden Bilder, wobei die verwendeten Projektoren ein Mittel zum elektronischen Shiften umfassen, mit dem die Deckungsgleichheit der von den zumindest zwei Projektoren projizierten Bildern durchführbar ist.

## Beschreibung

Die Erfindung betrifft ein Projektionssystem und ein Verfahren zur exakten Überlagerung von Projektionsbildern.

Video- und Datenprojektoren sind heute weit verbreitet. Diese umfassen beispielsweise Röhrenprojektoren, D-ILA (Direct Image Light Amplification)- Projektoren, Laserprojektoren, LCD (Liquid Crystal Display)-Projektoren und DLP (Digital Light Processing)- beziehungsweise DMD (Digital Micromirror Devices)- Projektoren. In einer Vielzahl von Anwendungen hat es sich als zweckmäßig herausgestellt, mehrere derartiger Projektoren zusammen für eine Präsentation zu nutzen. Beispielsweise ist es bekannt, zwei oder mehr Projektoren übereinander oder nebeneinander anzuordnen, um die Helligkeit des projizierten Bildes auf einer Projektionsebene zu vergrößern oder um stereoskopische Effekte zu erzielen. In solchen Fällen ist es von entscheidender Bedeutung, dass die projizierten Bilder gut zur Deckungsgleichheit gebracht werden, um die gewünschte Wirkung zu erzielen. Hierzu weisen die genannten Projektoren verstellbare Optiken auf, mit denen die zugeordneten Pixelbilder auf der Projektionsebene zur Deckung gebracht werden können. Derartige Bildverschiebungen mittels einer Verkippung beziehungsweise Verschiebung einer Linse beziehungsweise eines Linsensystems weist in der Regel den Nachteil des Auftretens von Abbildungsfehlern auf, welche die exakte Überlagerung der Pixelbilder auf der Projektionsebene erschweren. Diese Abbildungsfehler des optischen Abbildungssystems der Projektoren treten verstärkt dann auf, wenn der Strahlengang weit außerhalb der optischen Achse verläuft, was bei der beschriebenen Verschiebung des Projektionsbildes gerade der Fall ist. Einige der Abbildungsfehler können durch die Verwendung von aufwendigen Optiken vermieden werden, diese Systeme sind jedoch sehr teuer. Darüber hinaus ist die Justierung der Optik derartiger Projektionssysteme sehr zeitaufwendig.

Somit besteht die Aufgabe der Erfindung darin, die erwähnten Nachteile von herkömmlichen Projektionssystemen zumindest teilweise zu vermeiden.

Diese Aufgabe wird auf überraschend einfache Weise schon mit einem Projektionssystem mit zwei oder mehr Projektoren zur Verbesserung der Deckungsgleichheit von projizierten Pixeln auf einer Projektionsebene nach Anspruch 1 beziehungsweise einem Verfahren zum Betrieb eines derartigen Projektionssystems vermieden.

Bei der vorrichtungsseitigen Lösung sind bei dem erfindungsgemäßen Projektionssystem die zumindest zwei Projektoren im gleichen Abstand und im gleichen Projektionswinkel zu einer Projektionsebene angeordnet und die Optiken der Projektoren identisch ausgebildet und gleich eingestellt. Erfindungsgemäß ist die maximale Auflösung der Projektorpanel in den zumindest zwei Projektoren größer als die Auflösung der darzustellenden Bilder, wobei die verwendeten Projektoren ein Mittel zum elektronischen Shiften der Pixelbilder umfassen, mit welchem die Deckungsgleichheit der von den zumindest zwei Projektoren projizierten Bildern einstellbar ist.

Durch die angegebene konstruktive Maßnahme wird erreicht, dass beim erfindungsgemäßen Projektionssystem keine verstellbaren Optiken verbaut sein müssen, da die horizontale und/oder vertikale relative Verschiebung der projizierten Bilder zueinander elektronisch erfolgen kann. Da die Optiken im erfindungsgemäßen Projektionssystem nur für solche Strahlengänge verwendet werden, für die sie aufgrund der Gestaltung der jeweiligen Projektorpanels auch berechnet sind, kann das Auftreten von sichtbaren Abbildungsfehlern im wesentlichen vermieden werden. Auf diese Weise wird eine Qualität der Deckungsgleichheit der projizierten Bilder von mehreren Projektoren erreicht, die mit herkömmlichen Systemen nicht möglich waren beziehungsweise nur mit Projektionssystemen, welche ein Vielfaches der Herstellungskosten von erfindungsgemäß ausgebildeten Systemen verursachten.

Der Erfindung liegt die Idee zugrunde, bei einem Projektionssystem mit zumindest zwei Projektoren eine besonders gute Deckungsgleichheit der Projektionsbilder dadurch herzustellen, dass das darzustellende Bild in zumindest einem der Projektoren auf dessen Projektorpanel so verschoben (elektronisches Shifting) wird, dass dessen projiziertes Pixelbild genau dem Pixelbild eines weiteren Projektors auf der Projektionsebene überlagert ist. Auf diese Weise wird ein Ausgleich der Projektions- und Optikachsen der verwendeten Projektoren erreicht. Dies wird dadurch ermöglicht, dass die Auflösung des Projektorpanels größer ist als die Auflösung der darzustellenden Bilder, sodass nur ein Teil des Panels für die eigentliche Darstellung benötigt wird und demnach ein bestimmter Bereich des gesamten Projektionspanels für die Darstellung des Bildes ausgewählt werden kann. Dabei bezeichnet der Begriff "Panel" ganz allgemein die bildgebende Einrichtung des Projektors, die als ein Array von Elementen oder Zellen beschrieben werden kann, wobei jedes einzelne dieser Elemente beziehungsweise dieser Zellen bildgebend für ein einzelnes Pixel des Bildes auf der Projektionsebene ist. Wie der Fachmann erkennt, ist die Erfindung sowohl bei Projektoren umsetzbar, welche für jede der Grundfarben ein Panel aufweisen, als auch für Projektoren, welche nur ein einzelnes Panel, insbesondere zusammen mit einem Farbrad umfassen.

In einer besonders einfachen Ausführungsform ist das Mittel zum elektronischen Shiften in zumindest einem Projektor umfasst, das mit einer Steuereinrichtung datenverbunden ist, welche Information darüber erzeugt, um wie viele Pixel das Bild auf dem Projektorpanel zu verschieben ist, derart, dass die projizierten Pixelbilder deckungsgleich sind. Diese Information kann Daten für eine horizontale Pixelverschiebung und/oder eine vertikale Pixelverschiebung umfassen, je nachdem ob die zugeordneten Projektoren nebeneinander oder übereinander angeordnet sind. Von der Steuereinrichtung wird die Information zu dem elektronischen Shiftmittel übermittelt, welches die Information in die angegebene Bildverschiebung auf dem Projektorpanel und damit auf der Projektionsebene umsetzt. Das Steuermittel kann direkt in dem Projektor integriert sein, es ist jedoch auch möglich, dass das Steuermittel extern von der Projektoreinrichtung angeordnet ist.

Eine besonders flexibel anpassbare Ausführungsform ergibt sich, wenn beim erfindungsgemäßen Projektionssystem jeder der Projektoren, welche einander zugeordnete, zu überlagernde Bilder projizieren, ein Mittel zum elektronischen Shiften umfassen. Dabei sind alle diese Shiftmittel mit einer externen Steuereinrichtung datenverbunden, die für jedes Shiftmittel Information darüber erzeugt, um wie viele Pixel das Bild auf dem jeweiligen Projektorpanel zu verschieben ist, derart, dass die projizierten Pixelbilder in der Projektionsebene deckungsgleich sind. Auf diese Weise kann die Deckungsgleichheit der Projektionsbilder durch das Verschieben der Bilder auf mehreren Projektorpanel ausgeführt werden, sodass letztlich ein größerer Verschiebebereich bereitgestellt werden kann. Die externe Steuereinrichtung sorgt dabei dafür, dass jedem Shiftmittel in dem jeweiligen Projektor die zugehörige Shiftinformation übermittelt wird, sodass alle projizierten Pixelbilder deckungsgleich in der Projektionsebene überlagert sind.

Die Projektionsebene kann dabei je nach Ausführungsform des erfindungsgemäßen Projektionssystems gradlinig, jedoch auch gekrümmt sein. Darüber hinaus kann die Projektionsebene für eine Betrachtungsart in Reflektion, jedoch auch für eine Betrachtungsart in Transmission ausgebildet sein.

Um eine schnelle Justage des erfindungsgemäßen Projektionssystems zu ermöglichen, kann vorgesehen sein, dass die Steuereinrichtung eine Eingabeeinrichtung umfasst oder daran angeschlossen ist, über die der Nutzer Information betreffend den Abstand von Projektoren, die Größe der projizierten Pixel auf der Projektionsebene und/oder den Abstand der Projektoren von der Projektionsebene eingeben kann. Hierdurch sind die Informationen manuell eingebbar, welche die Steuereinrichtung zur Ermittlung des Maßes der elektronischen Verschiebung benötigt, sodass die Ermittlung der notwendigen und an die Shiftmittel in den jeweiligen Projektorpanel zu übertragenden Daten berechnet werden können. Der Nutzer muss demnach äußere geometrische Daten eingeben, die daraus sich ergebende notwendige elektronische Verschiebung der Pixelbilder beziehungsweise des Pixelbildes kann anhand der eingegebenen Informationen danach automatisch ermittelt und zu dem jeweiligen bzw. jeweiligem Shiftmittel übertragen werden. Erfindungsgemäß kann die Steuereinrichtung hierzu eine Berechnungseinrichtung umfassen.

Um die Deckungsgleichheit der Pixelbilder auf der Projektionsebene noch genauer einstellen zu können, kann eine Verschiebeeinrichtung zum relativen Verschieben von Projektoren zueinander in einer Richtung vorgesehen sein, die senkrecht zu den optischen Achsen der Projektoren und in der durch die optische Achse aufgespannten Ebene liegt. Dabei ist die Verschiebeeinrichtung zum translatorischen Verschieben der einander zugeordneten Projektoren in einem Bereich ausgebildet, der dem Abstand zweier benachbarter Pixel auf einem Projektorpanel entspricht. Hierdurch kann eine Feinjustage der Überlagerung der Bilder in der Projektionsebene durchgeführt werden, und insbesondere nach einer elektronischen Verschiebung (Shifting) verbleibende Unterschiede in den Pixellagen aufgehoben werden.

Um das erfindungsgemäße Projektionssystem für stereoskopische Effekte zu nutzen, kann vorgesehen sein, dass vor oder hinter einer Optik zumindest zweier Projektoren jeweils eine Einrichtung vorgesehen ist zur Festlegung der Eigenschaft des Projektorlichtes, insbesondere der Farbe und/oder der Polarisation des Lichtes. Diese jeweils einem Projektor zugeordneten Einrichtungen unterscheiden sich jedoch. Beispielsweise kann diese Einrichtung ein Interferenzfilter sein, das in den Grundfarben rot-grün-blau jeweils über einen vorgegebenen Wellenlängenabschnitt durchlässig ist. Bei dem anderen Projektor wird ein unterschiedlicher Interferenzfilter verwendet, dessen Transmissionsbereiche in den angegebenen Grundfarben leicht verschoben zu dem ersten Interferenzfilter sind. Bei entsprechender Betrachtung der in der Projektionsebene zur Deckung gebrachten Projektionsbilder mit einer zugeordnet ausgebildeten Brille ergibt sich ein stereoskopischer Effekt im Weißlicht. In ähnlicher Weise kann ein stereoskopischer Effekt durch die Veränderung von unterschiedlichen Polarisationen für die beiden zur Deckung gebrachten Bilder in der Projektionsebene verwendet werden. Wie dem Fachmann bekannt, kann hierbei sowohl mit linear als auch mit zirkular polarisiertem Licht gearbeitet werden.

Verfahrenseitig wird die obige Aufgabe gelöst durch ein Verfahren zum Betrieb eines aus zumindest zwei Projektoren bestehenden Projektionssystems zur Verbesserung der Deckungsgleichheit der projizierten Pixel auf der Projektionsebene. Dabei werden die Projektoren in gleichem Abstand und in gleichem Projektionswinkel zur Projektionsebene angeordnet, wobei die Optiken der Projektoren identisch sind und gleich eingestellt werden. Die maximale Auflösung der Projektorpanel in den zumindest zwei Projektoren ist größer als die Auflösung der darzustellenden Bilder. Die verwendeten Projektoren beinhalten ein elektronisches Shifting, wobei die sich aus der geometrischen Anordnung der Projektoren ergebende Differenz der Bildposition in der Projektionsebene dadurch ausgeglichen wird, dass das zu projizierende Bild auf dem Projektionspanel elektronisch soweit verschoben wird, dass es zur deckungsgleichen Darstellung der Bilder in der Projektionsebene kommt.

Zum Erhalt der geforderten Deckungsgleichheit kann das elektronische Shifting in den zumindest zwei Projektoren so durchgeführt werden, dass jeweilig zugeordnete Bildpixel der Bilder von Projektoren relativ zueinander um die Anzahl von Pixel verschoben werden, die multipliziert mit der Pixelgröße auf der Projektionsebene gerade den Abstand der optischen Achsen der beiden Projektoren ergibt. Im Falle einer nichtstereografischen Darstellung sind jeweils zugeordnete Bildpixel identisch, während in einer stereografischen Darstellung diese Bildpixel gleichen Bestandteilen des Bildes entsprechen, die zusammen einen stereografischen Eindruck für den Betrachter ergeben.

Grundsätzlich kann das elektronische Shifting bei zwei Projektoren, die einander zugeordnete Bilder oder Bildbereiche projizieren, so durchgeführt werden, dass das Shifting nur auf einem Projektor durchgeführt wird. Es ist jedoch auch möglich, dass das elektronische Shifting oder Verschiebung in beiden Projektoren durchgeführt wird, um letztlich die geforderte Deckungsgleichheit der Projektionsbilder in der Projektionsebene zu erzielen. Im ersten Fall wird bei dem in Projektionsrichtung gesehen, am linken Projektor ein elektronisches Shifting des Bildes nach rechts durchgeführt, wobei eine Verschiebung des Bildes im rechten Projektor entfällt, wenn das Bild bei diesem am linken Rand des Projektorpanels startet. In ähnlicher Weise kann das elektronische Shifting in dem in Projektionsrichtung rechten Projektor durchgeführt werden, in der Art, dass ein elektronisches Shifting des Bildes nach links erfolgt, wenn das Bild in den linken Projektor auf dessen Projektorpanel am rechten Rand angeordnet ist. Wie erläutert, kann das elektronische Shifting auch an beiden Projektoren durchgeführt werden, sodass in Projektionsrichtung gesehen, am rechten Projektor ein elektronisches Shifting des Bildes nach links und am linken Projektor ein elektronisches Shifting des Bildes nach rechts durchgeführt wird, sodass die überlagerten Bildprojektionen beliebig innerhalb des Überlappungsbereiches der beiden Projektoren in der Projektionsebene verschoben werden können.

Es versteht sich, dass bei entsprechender Pixelgröße der Projektorpanel es grundsätzlich auch möglich ist, die Projektionsbilder von mehr als zwei, beispielsweise von drei Projektoren auf der Projektionsebene deckungsgleich zu überlagern, sodass beispielsweise die Helligkeit des Bildes noch weiter erhöht werden kann oder andere, neuartige Effekte erzeugt werden können. Einzige Bedingung ist, dass die Pixelanzahl der Panel relativ zu der Pixelanzahl des darzustellenden Bildes derart zueinander eingestellt sind, dass die notwendige Verschiebung der Pixelbilder in den einzelnen Projektoren eingestellt werden kann, um den beschriebenen Ausgleich der Projektions- und Optikachsen der Projektoren durchzuführen.

Darüber hinaus ist es natürlich auch möglich, nicht nur horizontal nebeneinander stehende Projektoren mit dessen Projektionsbildern zur Deckungsgleichheit zu bringen, sondern auch Projektoren, die vertikal zueinander angeordnet sind.

Die Erfindung wird im Folgenden durch das Beschreiben einiger Ausführungsbeispiele unter Bezugnahme auf die beiliegenden Figuren erläutert, wobei
- Fig. 1: in einer Prinzipskizze ein erfindungsgemäßes Projektionssystem in einer Aufsicht und
- Fig. 2: das in Fig. 1 dargestellte Projektionssystem in einer Vorderansicht zeigt.

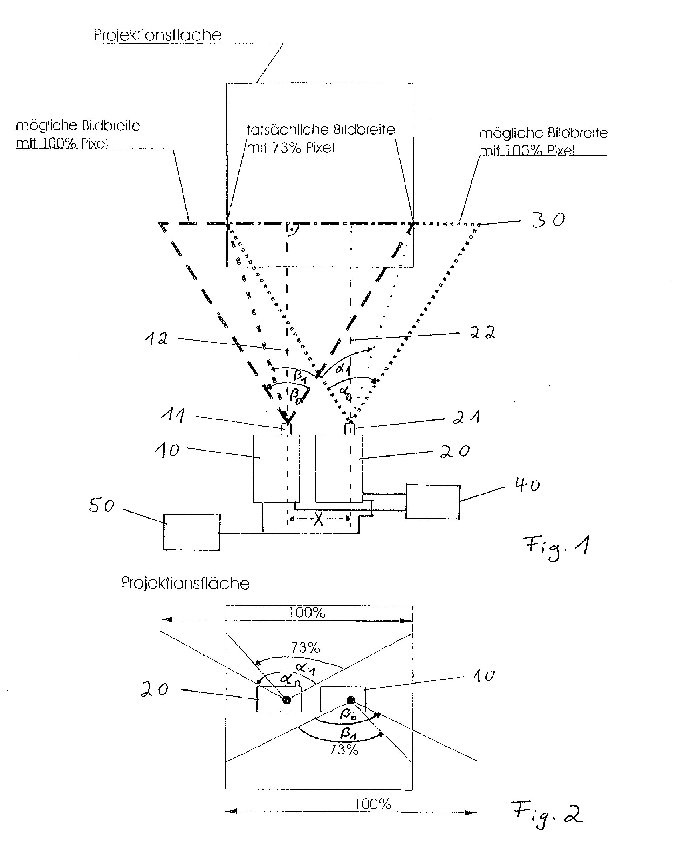

Die zuerst beschriebene Ausführungsform des erfindungsgemäßen Projektionssystems ist bestimmt, die Helligkeit des in der Ebene 30 projizierten Bildes zu erhöhen, siehe Fig. 1. Zu diesem Zweck weist das Projektionssystem zwei Projektoren 10, 20 auf. Beide umfassen jeweils eine Optik 11, 21, mit welchen das jeweilige, in der Figur nicht dargestellte Projektorpanel in die Projektionsebene 30 abgebildet wird. Die Projektoren sind so angeordnet, dass diese den gleichen Abstand und den gleichen Projektionswinkel zur Projektionsebene 30 aufweisen. Beide optischen Achsen 12, 22 stehen hier senkrecht zur Projektionsebene 30. Die Projektoren stehen nebeneinander mit einem relativen Abstand X der beiden optischen Achsen 12, 22 zueinander.

Vorliegend sind beide Projektoren gleich aufgebaut mit einem D-ILA Panel, das eine Auflösung von 1.400 x 1.050 Pixel aufweist. Diese werden in dem Beispiel zur Projektion eines Bildes mit einer Größe von 1.024 x 1.024 Pixel verwendet. Beide Optiken 11, 21 sind zur Scharfstellung des Bildes auf der Projektionsebene 30 fokusierbar, es ist jedoch mit den Optiken nicht möglich, eine seitliche Verschiebung des jeweiligen, auf die Ebene projizierten Bildes durchzuführen. Durch die Abbildung der jeweiligen Projektorpanel auf die Ebene 30 ergibt sich für beide Projektoren ein Projektionskegel mit einem Öffnungswinkel α₀ beziehungsweise β₀, die aufgrund der Gleichheit der Projektoren identisch sind. Dabei bestimmen die angegebenen Projektionswinkel α₀ und β₀ jeweils die maximal mögliche Bildbreite, die dadurch definiert ist, das alle in horizontalen Richtung angeordneten 1.400 Pixel der Projektorpanel bei der Darstellung verwendet werden. Aufgrund der Nebeneinanderanordnung der Projektoren 10, 20 sind die beiden in die Projektionsebene 30 projizierten Bilder seitlich verschoben, wobei sich ein Überlappungsbereich ergibt, welcher in der Figur als Projektionsfläche bezeichnet ist.

Da die horizontale Bildbreite nur 1.024 Pixel beträgt, kann das Projektionssystem so eingestellt werden, dass sich ein Überlappungsbereich der Projektoren von etwa 73 % ergibt. Vorliegend wird das an beide Projektoren gelieferte identische Pixelbild am rechten Projektor unverschoben angezeigt, womit sich ein Bildprojektionswinkel von α₁ einstellt. Um dieses Projektionsbild mit dem Projektionsbild des linken Projektors 10 zur exakten Überlagerung zu bringen, wird das Bild im linken Projektor 10 um (1.400 - 1.024) = 376 Pixel nach rechts verschoben. Der Projektionswinkel des linken Projektors beträgt hier β₁, der wieder identisch mit entsprechenden Projektionswinkel α₁ des rechten Projektors ist. Mit der Verschiebung des Bildes am linken Projektor wird erreicht, dass die Pixelbilder auf der Projektionsebene gerade deckungsgleich sind und sich dadurch die Helligkeit des Gesamtbildes erhöht. Diese Verschiebung des Bildes auf dem Panel des linken Projektors wird mit dem sich im Projektor befindlichen elektronischen Shiftmittel erzeugt. Dieses Shiftmittel wird von außen über eine Steuereinrichtung 40 angesteuert, von welcher die notwendige Information, hier die Anzahl der Pixel, über welche das Bild in horizontaler Richtung geshiftet werden soll, an dem Projektor übermittelt.

Nach der beschriebenen Voreinstellung werden die vom Rechner 50 an die beiden Projektoren übermittelten identischen Bilder, wie dargestellt, von dem rechten Projektor unverschoben und vom linken Projektor in horizontaler Richtung um 376 Pixel verschoben dargestellt, sodass letztlich auf der Projektionsebene 30 die beiden Projektionsbilder deckungsgleich überlagert sind. Im in Fig. 1 angegebenen Beispiel ist das System als Rückprojektionssystem ausgebildet mit einer Rückprojektionsscheibe in der Projektionsebene 30, sodass der Betrachter in Richtung zu den Projektoren die projizierten Bilder betrachtet.

In Abhängigkeit der Linse der Projektoren, der Größe der Pixel im Projektorpanel und dem Abstand zwischen dem Projektor und der Projektionsebene ergibt sich eine bestimmte Größe eines einzelnen Pixels auf der Projektionsebene. Die Anzahl der zu verschiebenden Pixel hängt damit geometrisch von dem Abstand der beiden Projektoren 10, 20 ab. Sollen beispielsweise die beiden Projektoren in einem senkrecht zur optischen Achse gemessenen Abstand von 30 cm aufgestellt werden, und die mögliche Verschiebung des Bildes am linken Projektor voll ausgenutzt werden, d.h. vorliegend 376 Pixel, beträgt die Pixelgröße in der Projektionsebene etwa 0,8 mm. Es versteht sich, dass je nach spezieller Anordnung der Projektoren nicht die maximal mögliche Verschiebung des Bildes ausgenutzt werden muss. Darüber hinaus besteht auch die Möglichkeit, das Bild sowohl im linken Projektor als auch im rechten Projektor zur exakten Überlagerung der beiden Pixelbilder in der Projektionsebene 30 zu verschieben. In diesem Fall erhalten der linke und der rechte Projektor unterschiedliche Shiftsteuersignale von der externen Steuereinrichtung 40, wie es durch die zwei Verbindungen der Steuereinrichtung 40 zu den Projektoren 10, 20 dargestellt ist.

Fig. 2 zeigt das in Fig. 1 dargestellte Projektionssystem in einer Vorderansicht in Richtung der Projektoren schauend, wobei die Projektionswinkel für die vollständigen Projektionspanel wieder mit α₀ und β₀ bezeichnet sind. Mit α₁ beziehungsweise β₁ sind wiederum die Projektionswinkelausschnitte dargestellt, welche letztlich den sich überlappenden Bereich in der Projektionsebene 30 (siehe Fig. 1) darstellen.

In einer anderen Ausführungsform der Erfindung kann das Projektionssystem zur Darstellung von stereoskopischen Bildern verwendet werden. In diesem Fall erhalten die sich in der Projektionsebene überlappenden Projektoren vom Rechner 50 unterschiedliche Bilder. Zur Differenzierung der Bilder im Auge des Betrachters wird eine Eigenschaft des Lichtes, beispielsweise die Frequenz oder Polarisation, für die Strahlengänge der Projektoren unterschiedlich eingestellt. Bei dem in Fig. 1 dargestellten Projektionssystem mit zwei Projektoren wird beispielsweise jeweils ein Polarisationsfilter in den Strahlengang der beiden Projektoren gestellt, wobei die Polarisation in den beiden Strahlengängen orthogonal zueinander liegen. Diese orthogonalen Polarisationseigenschaften sind vertikale und horizontale beziehungsweise linkszirkulare und rechtszirkulare Polarisationen. Zum Erhalt eines stereografischen Eindrucks muss der Betrachter eine Brille tragen, die es erlaubt, dass nur Licht eines Projektors von einem Auge empfangen wird, während das Licht des anderen Projektors von dem anderen Auge erfasst wird. Hierzu ist die Brille mit Polarisationsfolien mit senkrecht zueinander liegender Polarisationsachse ausgestattet.

In einer anderen Ausführungsform der Erfindung zur Erzielung einer stereoskopischen Abbildung kann mit sogenannten Interferenzfiltern gearbeitet werden, welche in den Grundfarben rot-grün-blau einen begrenzten, nur wenige Nanometer breiten Spektralbereich des Lichtes durchlassen und den Rest des Lichtes über den Effekt der Interferenz reflektieren. Ein derartiger Interferenzfilter ist wiederum in den Strahlengang eines jeden der zur Überlagerung gebrachten Projektoren eingefügt. Umfasst das Projektionssystem, wie in Fig. 1 gezeigt, zwei Projektoren, weist dieses erfindungsgemäße Projektionssystem zwei der beschriebenen Interferenzfilter auf, von denen jeweils eines im Strahlengang des jeweiligen Projektors angeordnet ist. Die Interferenzfilter sind im Hinblick auf ihre Transmissionseigenschaften leicht verschoben ausgebildet, sodass Licht, welches durch den einen Interferenzfilter transmittiert, von dem zweiten Interferenzfilter reflektiert wird und umgekehrt. Insofern kann für jeden der beiden Projektoren eine Weißlichtprojektion bereitgestellt werden, die sich wiederum auf dem Projektionsschirm überlagern. Die Differenzierung im Auge des Betrachters wird ähnlich wie bei der Polarisations-Stereoskopie realisiert.

Um eine besonders gute Überlappung oder Deckungsgleichheit der in der Projektionsebene überlagerten Bilder bereitzustellen, ist in einer besonderen Ausführung der Erfindung eine Verschiebeeinrichtung vorgesehen, mit welcher die Projektoren mit einer Genauigkeit von einigen µm zueinander verschoben werden können. Mit dieser Verschiebeeinrichtung kann letztlich ein Zwischenbereich kompensiert werden, der sich ergibt, wenn die elektronische Shift in einem Projektor um ein weiteres Pixel vergrößert beziehungsweise verkleinert wird. Da unter Umständen die ideale Deckungsgleichheit gerade zwischen einer Verschiebung um eine bestimmte Anzahl von Pixeln und um diese Anzahl + 1 Pixel erreicht wird, kann dieser Zwischenbereich gerade durch die Verschiebeeinrichtung für die Projektoren abgedeckt werden und so eine besonders gute Deckungsgleichheit der überlagerten Bilder in der Projektionsebene eingestellt werden.

## Patentansprüche

1. Projektionssystem mit zwei oder mehr Projektoren zur Verbesserung der Deckungsgleichheit von projizierten Pixeln auf der Projektionsebene, **dadurch gekennzeichnet, dass**
- die Projektoren im gleichen Abstand und im gleichen Projektionswinkel zu einer Projektionsebene angeordnet sind,
- die Optiken der Projektoren identisch und gleich eingestellt sind,
wobei die maximale Auflösung der Projektorpanel in den zumindest zwei Projektoren (10, 20) größer ist als die Auflösung der darzustellenden Bilder und die verwendeten Projektoren ein Mittel zum elektronischen Shiften umfassen, mit dem die Deckungsgleichheit der von den zumindest zwei Projektoren projizierten Bildern einstellbar ist.

2. Projektionssystem nach Anspruch 1, **dadurch gekennzeichnet, dass** das Mittel zum elektronischen Shiften in zumindest einem Projektor (10, 20) umfasst ist, wobei das elektronische Shiftmittel mit einer Steuereinrichtung (40) datenverbunden ist, welche Information darüber erzeugt, um wie viele Pixel das Bild auf dem Projektorpanel zu verschieben ist, derart, dass die projizierten Pixelbilder deckungsgleich sind, wobei diese Information Daten für eine horizontale Pixelverschiebung und/oder vertikale Pixelverschiebung umfasst.

3. Projektionssystem nach Anspruch 2, **dadurch gekennzeichnet, dass** jeder der Projektoren (10, 20) , welche einander zugeordnete, zu überlagernde Bilder projizieren, ein Mittel zum elektronischen Shiften umfasst, wobei alle elektronische Shiftmittel mit einer externen Steuereinrichtung datenverbunden sind, die für jedes Shiftmittel Information darüber erzeugt, um wie viele Pixel das Bild auf dem jeweiligen Projektorpanel zu verschieben ist, derart, dass die projizierten Pixelbilder deckungsgleich sind.

4. Projektionssystem nach Anspruch 2 oder 3, **dadurch gekennzeichnet, dass** die Steuereinrichtung (40) an eine Eingabeeinrichtung angeschlossen ist, über welche Information betreffend den Abstand von Projektoren, die Größe der projizierten Pixel auf einer Projektionsebene (30) und/oder den Abstand der Projektoren von der Projektionsebene eingebbar sind.

5. Projektionssystem nach Anspruch 4, **dadurch gekennzeichnet, dass** die Steuereinrichtung eine Berechnungseinrichtung zur Ermittlung von Daten zur Ansteuerung der Shiftmittel der Projektoren im Ansprechen auf über die Eingabeeinrichtung eingegebenen Informationen umfasst.

6. Projektionssystem nach einem der Ansprüche 1 bis 5, **gekennzeichnet, durch** eine Verschiebeeinrichtung zum relativen Verschieben von Projektoren zueinander in einer Richtung, die senkrecht zu den optischen Achsen der Projektoren und in der **durch** die optischen Achsen aufgespannten Ebene liegt.

7. Projektionssystem nach einem der Ansprüche 1 bis 6, **gekennzeichnet, durch** eine vor oder hinter einer Optik eines Projektors angeordnete Einrichtung zur Festlegung der Eigenschaft des Projektionslichtes, insbesondere der Farbe und /oder die Polarisation des Lichtes.

8. Verfahren zum Betrieb eines aus zumindest zwei Projektoren bestehenden Projektionssystems zur Verbesserung der Deckungsgleichheit der projizierten Pixel auf der Projektionsebene, **dadurch gekennzeichnet, dass**
- die Projektoren im gleichen Abstand und im gleichen Projektionswinkel zur Projektionsebene angeordnet werden,
- die Optiken der Projektoren identisch sind und gleich eingestellt werden,
wobei die maximale Auflösung der Projektorpanel in den zumindest zwei Projektoren größer ist als die Auflösung der darzustellenden Bilder und die verwendeten Projektoren ein elektronisches Shifting beinhalten und die sich ergebende Differenz der Bildposition in der Projektionsebene dadurch ausgeglichen wird, dass das zu projizierende Bild auf dem Projektionspanel elektronisch soweit verschoben wird, das es zur deckungsgleichen Darstellung der Bilder kommt.

9. Verfahren nach Anspruch 8, **dadurch gekennzeichnet**, d ass das elektronische Shifting in den zumindest zwei Projektoren so durchgeführt wird, dass jeweilig zugeordnete Bildpixel der Bilder von zwei Projektoren relativ zueinander um die Anzahl von Pixeln verschoben werden, die multipliziert mit der Pixelgröße auf dem Projektionsschirm gerade den Abstand der optischen Achsen der beiden Projektoren ergibt.

10. Verfahren nach Anspruch 8 oder 9, **dadurch gekennzeichnet, dass** bei zwei Projektoren das elektronische Shifting an beiden Projektoren so durchgeführt wird, dass in Projektionsrichtung gesehen am rechten Projektor ein elektronisches Shifting des Bildes nach links und am linken Projektor ein elektronisches Shifting des Bildes nach rechts durchgeführt wird.

11. Verfahren nach Anspruch 8 oder 9, **dadurch gekennzeichnet, dass** bei zwei Proj ektoren das elektronische Shifting in Projektionsrichtung gesehen am linken Projektor so durchgeführt wird, dass ein elektronische Shifting des Bildes nach rechts durchgeführt wird oder das elektronische Shifting in Projektionsrichtung gesehen am rechten Projektor so durchgeführt wird, dass ein elektronische Shifting des Bildes nach links durchgeführt wird.
